# EUROPEAN PATENT SPECIFICATION

(11) **EP 3 614 709 B1**
(45) Date of publication and mention of the grant of the patent: **26.04.2023**
(21) Application number: 17908666.5
(22) Date of filing: 04.05.2017
(51) Int. Cl.: H04W 12/041, H04W 12/0433, H04W 36/00

(54) **KEY GENERATION METHOD AND RELATED DEVICES**
SCHLÜSSELERZEUGUNGSVERFAHREN UND DIESBEZÜGLICHE VORRICHTUNGEN
PROCÉDÉ DE GÉNÉRATION DE CLÉS ET DISPOSITIFS ASSOCIÉS

(43) Date of publication of application: 26.02.2020
(73) Proprietor: Huawei Technologies Co., Ltd., Longgang District Shenzhen, Guangdong 518129 (CN)
(72) Inventor: XIONG, Xiaochun, Shenzhen Guangdong 518129 (CN); YIN, Xinxing, Shenzhen Guangdong 518129 (CN)
(74) Representative: Gill Jennings & Every LLP
(86) International application number: PCT/CN2017/083010
(87) International publication number: WO 2018/201381

(56) References cited:
- WO-A1-2015/013964
- CN-A- 101 232 731
- CN-A- 101 931 950
- CN-A- 102 027 769
- "3rd Generation Partnership Project; Technical Specification Group Services and System Aspects; Study on the security aspects of the next generation system (Release 14)", 3GPP DRAFT; 33899-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA 3 March 2017 (2017-03-03), XP051680259, Retrieved from the Internet: URL:http://www.3gpp.org/ftp/tsg%5Fsa/TSG%5 FSA/TSGS%5F75/Docs/SP%2D170096%2Ezip [retrieved on 2017-03-03]
- "3rd Generation Partnership Project; Technical Specification Group Services and System Aspects; 3GPP System Architecture Evolution (SAE); Security architecture (Release 14)", 3GPP STANDARD ; TECHNICAL SPECIFICATION ; 3GPP TS 33.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V14.2.0, 17 March 2017 (2017-03-17), pages 1-152, XP051290775, [retrieved on 2017-03-17]
- ZTE: "Hiding keys exchanged between serving network nodes", 3GPP DRAFT; S3-170611 HIDING KEYS EXCHANGED BETWEEN SERVING NETWORK NODES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. SA WG3, no. Busan, Korea; 20170327 - 20170331 27 March 2017 (2017-03-27), XP051248367, Retrieved from the Internet: URL:http://www.3gpp.org/ftp/Meetings_3GPP_ SYNC/SA3/Docs/ [retrieved on 2017-03-27]
- NTT DOCOMO ET AL: "Discussion on S1AP Signalling for KeNB update procedure", 3GPP DRAFT; R3-082580_CONCERN ON KENB HANDLING PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050323860, [retrieved on 2008-09-24]

## Description

### TECHNICAL FIELD

This application relates to the field of wireless network technologies, and in particular, to a key generation method and a related device.

### BACKGROUND

In a mobile communications system, user equipment (User Equipment, UE) often moves frequently during a use process. When the user equipment moves from a coverage area of a cell or a sector to that of another cell or another sector, a handover occurs in UE communication. After the handover is completed, the UE needs to create a new secure communication key between the UE and a target base station, ensuring communication security between the UE and the target base station.

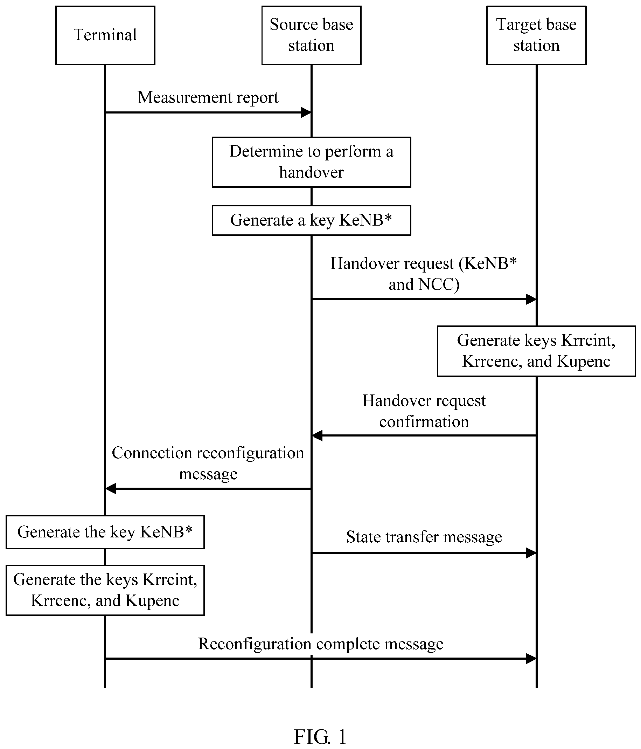

FIG 1 is a schematic flowchart of a key generation method according to a prior-art solution. The method includes the following steps: S1. A source base station (Source eNB) receives a measurement report sent by a terminal, and determines, based on the measurement report, to perform an X2 (a communications interface between base stations) handover. S2. The source base station calculates an intermediate key KeNB*CELL = Func(KeNB, Target-cell PCI, Target-cell DlEarfcn), where KeNB is an original key, Target-cell PCI (Physical Cell ID) is a cell identity of a target cell, and Target-cell DlEarfcn is a carrier frequency of the target cell. S3. The source base station sends a handover request to a target base station (Target eNB), where the handover request includes the intermediate key KeNB* and a next hop chaining count (Next Hop Chaining Count, NCC) that is associated with the original key KeNB and that is used to deduce the KeNB*. S4. The target base station generates a radio resource control (Radio Resource Control, RRC) integrity protection key Krrcint, an RRC encryption key Krrcenc, and a user plane encryption key Kupenc by using the intermediate key KeNB*. These keys are directly used in a subsequent UE handover process. S5. The target base station sends a handover request confirmation message to the source base station, where the handover request confirmation message includes the cell identity of the target cell, the carrier frequency of the target cell, and the NCC. S6. The source base station sends a radio resource control (Radio Resource Control, RRC) connection reconfiguration message to the terminal. S7. The terminal deduces the intermediate key KeNB* based on the locally stored original key, the cell identity of the target cell, and the carrier frequency of the target cell. S8. The terminal generates the RRC integrity protection key Krrcint, the RRC encryption key Krrcenc, and the user plane encryption key Kupenc by using the intermediate key KeNB*. S9. The terminal sends an RRC reconfiguration complete message to the target base station, and performs encryption by using the key deduced in S8.

After a UE handover is completed based on the foregoing process, the new secure communication key is created between the terminal and the target base station, ensuring the communication security between the UE and the target base station. However, a forward security problem exists in a key deduction method. In other words, the source base station may deduce a key used by the handed-over-to target base station from the KeNB used by the source base station. If the source base station is maliciously invaded, and KeNB exposure is caused, communication protection after the UE handover may be broken.

To resolve the foregoing problem, the target base station may initiate one intra-cell handover, so that key deduction is performed again and the source base station no longer knows a newest key of the target base station. However, initiating the intra-cell handover leads to more message exchanges between the terminal and the target base station, and increases network load. In addition, initiating the intra-cell handover increases a communication latency of the terminal, and a low latency service requirement in a 5G scenario cannot be satisfied.
"3rd Generation Partnership Project; Technical Specification Group Services and System Aspects; Study on the security aspects of the next generation system (Release 14)", 3GPP DRAFT; 33899-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE vol. TSG SA 3 March 2017 (2017-03-03), XP051680259 discloses a key negotiation procedure of dual connectivity for addressing leakage of a secret key.

### SUMMARY

This application provides a key generation method and a related device, to resolve a problem in a prior-art solution that network load and a communication latency are increased because an intra-cell handover is initiated to generate a new key.

The invention is defined by the independent claims. According to a first aspect, an embodiment of this application provides a key generation method. The method includes: receiving, by a terminal, a first message sent by a source base station, where the first message includes a key exchange algorithm selected by a target base station and a first public key generated by the target base station; generating a first shared key based on the key exchange algorithm, the first public key, and a first private key generated by the terminal; and sending a second message to the target base station, where the second message includes a second public key generated by the terminal. Before the receiving, by a terminal, a first message sent by a source base station, the method further comprises sending, by the terminal, a plurality of key exchange algorithms supported by the terminal to the source base station. The target base station also generates the first shared key. In this process, the terminal and the target base station perform a key exchange based on a currently existing message, and a shared key is generated after a handover is completed. Subsequent communication is protected through derivation performed based on the shared key, so that there is no need to deduce a key relying on a key of the source base station. Therefore, a communication latency and network load are reduced while communication security is ensured.

In a possible design, the first message further includes a cell identity and a carrier frequency of a target cell; and before sending the second message to the target base station, the terminal generates a second key based on a prestored first key, and the cell identity and the carrier frequency of the target cell; and performs encryption processing on the second message by using the second key, to ensure communication security between the terminal and the target base station.

In another possible design, before receiving the first message sent by the source base station, the terminal sends a plurality of key exchange algorithms supported by the terminal to the source base station.

In another possible design, the plurality of key exchange algorithms are sent by the source base station to the target base station.

In another possible design, after generating the first shared key based on the key exchange algorithm, the first public key, and the first private key generated by the terminal, the terminal generates an RRC integrity protection key, an RRC encryption key, and a user plane encryption key based on the first shared key.

In another possible design, after generating the first shared key based on the key exchange algorithm, the first public key, and the first private key generated by the terminal, the terminal generates a second shared key based on the first shared key, and the cell identity and the carrier frequency of the target cell.

In another possible design, the first message is an RRC connection reconfiguration message, and the second message is an RRC reconfiguration complete message.

According to a second aspect, an embodiment of this application provides a key generation method. The method includes: receiving, by a target base station, a second message sent by a terminal, where the second message includes a second public key generated by the terminal; and generating a first shared key based on the second public key, a key exchange algorithm selected by the target base station, and a second private key generated by the target base station. Before the receiving, by a target base station, a second message sent by a terminal, the method further comprises: receiving, by the target base station, a handover request sent by a source base station, wherein the handover request comprises a plurality of key exchange algorithms supported by the terminal; and selecting, by the target base station, the key exchange algorithm from the plurality of key exchange algorithms. In this process, the terminal and the target base station perform a key exchange based on a currently existing message, and a shared key is generated after a handover is completed. Subsequent communication is protected through derivation performed based on the shared key, so that there is no need to deduce a key relying on a key of a source base station. Therefore, a communication latency and network load are reduced while communication security is ensured.

In another possible design, before receiving the second message sent by the terminal, the target base station receives a handover request sent by a source base station, where the handover request includes a plurality of key exchange algorithms supported by the terminal; and selects the key exchange algorithm from the plurality of key exchange algorithms.

Optionally, the handover request further includes a next hop chaining count and a second key that is generated by the source base station based on a prestored first key, and a cell identity and a carrier frequency of a target cell.

In another possible design, after selecting the key exchange algorithm from the plurality of key exchange algorithms, the target base station sends a third message to the source base station, where the third message includes the key exchange algorithm selected by the target base station and a first public key generated by the target base station; after receiving the third message, the source base station forwards, to the terminal, the key exchange algorithm and the first public key generated by the target base station; and the terminal generates the first shared key correspondingly.

In another possible design, the third message is a handover complete confirmation message.

In another possible design, after generating the first shared key based on the second public key, the key exchange algorithm selected by the target base station, and the second private key generated by the target base station, the target base station generates an RRC integrity protection key, an RRC encryption key, and a user plane encryption key based on the first shared key.

In another possible design, after generating the first shared key based on the second public key, the key exchange algorithm selected by the target base station, and the second private key generated by the target base station, the target base station generates a second shared key based on the first shared key, and the cell identity and the carrier frequency of the target cell.

According to a third aspect, an embodiment of this application provides a terminal, where the terminal is configured to implement, in a form of hardware/software, a method and a function performed by the terminal in the first aspect, and the hardware/software includes a unit corresponding to the function.

According to a fourth aspect, an embodiment of this application provides a target base station, where the target base station is configured to implement, in a form of hardware/software, a method and a function performed by the target base station in the second aspect, and the hardware/software includes a unit corresponding to the function.

According to a fifth aspect, this application provides another terminal, including a processor, a memory, and a communications bus. The communications bus is configured to implement connection communication between the processor and the memory, and the processor executes a program stored in the memory, to implement the steps of the key generation method provided in the first aspect.

According to a sixth aspect, this application provides another target base station, including a processor, a memory, and a communications bus. The communications bus is configured to implement connection communication between the processor and the memory, and the processor executes a program stored in the memory, to implement the steps of the key generation method provided in the second aspect.

In a possible design, the terminal provided in this application may include a corresponding module configured to perform network device actions in the foregoing method designs. The module may be software and/or hardware.

In a possible design, the base station provided in this application may include a corresponding module configured to perform terminal actions in the foregoing method designs. The module may be software and/or hardware.

Still another aspect of this application provides a computer readable storage medium, where the computer readable storage medium stores an instruction, and when the instruction is run on a computer, the computer is enabled to perform the method in the foregoing aspects.

Still another aspect of this application provides a computer program product including an instruction, where when the instruction is run on a computer, the computer is enabled to perform the method in the foregoing aspects.

### DESCRIPTION OF DRAWINGS

To describe the technical solutions in the embodiments of this application or in the background more clearly, the following briefly describes the accompanying drawings required for describing the embodiments of this application or the background.
FIG 1 is a schematic flowchart of a key generation method according to a prior-art solution;
FIG 2 is a schematic architectural diagram of a key generation system according to an embodiment of this application;
FIG 3 is a schematic flowchart of a key generation method according to an embodiment of this application;
FIG 4 is a schematic structural diagram of a terminal according to an embodiment of this application;
FIG 5 is a schematic structural diagram of a target base station according to an embodiment of this application;
FIG 6 is a schematic structural diagram of another terminal according to an embodiment of this application; and
FIG 7 is a schematic structural diagram of another target base station according to an embodiment of this application.

### DESCRIPTION OF EMBODIMENTS

The following describes the embodiments of this application with reference to the accompanying drawings in the embodiments of this application.

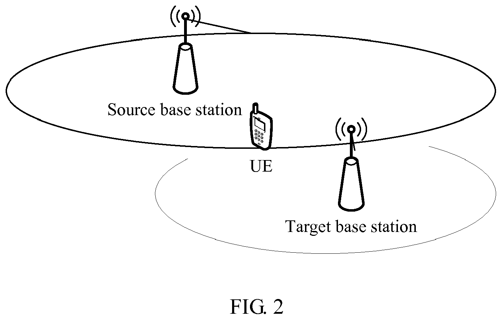

FIG 2 is a schematic architectural diagram of a key generation system according to an embodiment of this application. The key generation system includes a terminal (UE), a source base station (Source eNB), and a target base station (Target gNB). The terminal may be handed over between the source base station and the target base station. The terminal may be a device that provides a voice and/or data connection to a user, may be a device that is connected to a computing device such as a laptop computer or a desktop computer, or may be an independent device such as a personal digital assistant (Personal Digital Assistant, PDA). The terminal may also be referred to as a system, a subscriber unit, a subscriber station, a mobile station, a mobile console, a remote station, an access point, a remote terminal, an access terminal, a user terminal, a user agent, or a user apparatus. The source base station and the target base station, which may be access points, NodeBs, evolved NodeBs (Environment Bureau, eNB), or 5G base stations (Next generation base station, gNB), are devices that communicate with a wireless terminal in an access network over an air interface by using one or more sectors. By converting a received air interface frame into an IP packet, a base station may serve as a router between the wireless terminal and a remaining part of the access network. The access network may include an internet protocol network. The base station may further coordinate air interface attribute management.

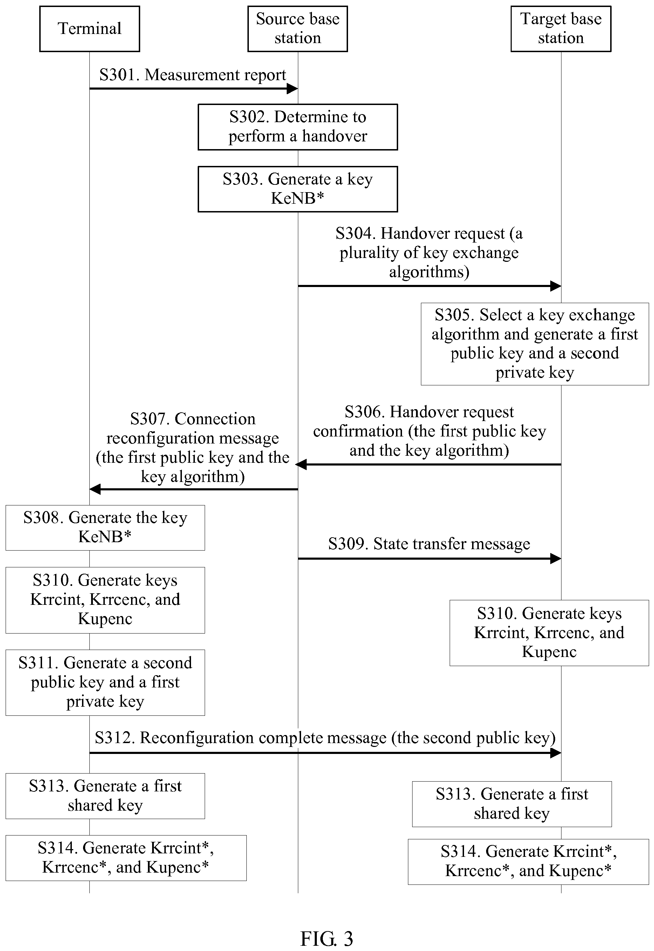

FIG 3 shows a key generation method according to an embodiment of this application. The method includes but is not limited to the following steps.

S301. A terminal sends a measurement report to a source base station.

During specific implementation, the source base station may send a measurement request to the terminal. After receiving the measurement request, the terminal first measures a signal of a cell that is covered by the source base station, and then sends the measurement report to the source base station.

Optionally, when exchanging an access stratum (Access Stratum, AS) security mode command (Security Mode Command, SMC) during an attach procedure, the terminal may send a DH (Deffie-Hellman) security capability supported by the terminal to the source base station. The source base station stores the DH security capability supported by the terminal in a terminal security context. The DH security capability includes a plurality of key exchange algorithms, each key exchange algorithm includes an algorithm used for subsequent DH key negotiation, a key length, and the like, and the key exchange algorithms are different from each other.

S302. The source base station determines to perform an Xn (a communications interface between base stations) handover based on the measurement report.

During specific implementation, the source base station determines, based on the measurement report, whether the terminal moves from the cell covered by the source base station to a cell covered by the target base station. If determining that the terminal moves from the cell covered by the source base station to the cell covered by the target base station, the source base station determines to perform the Xn handover.

S303. The source base station calculates a second key based on a prestored first key, and a cell identity and a carrier frequency of a target cell, where KeNB*CELL = Func(KeNB, Target-cell PCI, Target-cell DlEarfcn). The derivation formula is defined in 3GPP 33.401 section A.5. KeNB*CELL is the second key (a new key), KeNB is the first key (an original key), Target-cell PCI (Physical Cell ID) is the cell identity of the target cell, and Target-cell DlEarfcn is the carrier frequency of the target cell.

S304. The source base station sends a handover request to the target base station. The handover request includes a plurality of key exchange algorithms supported by the terminal, and the handover request also includes the second key and a next hop chaining count (Next Hop Chaining Count, NCC). The next hop chaining count may be used to deduce the new key from the original key.

S305. The target base station selects the key exchange algorithm from the plurality of key exchange algorithms and generates a first public key and a second private key.

During specific implementation, the target base station may freely select the key exchange algorithm from the plurality of key exchange algorithms. When the first public key and the second private key are generated, the terminal and the target base station agree on an initial number g, and separately generate random numbers Nu and Nt locally, and then the target base station generates a public-private key pair based on the random numbers Nu and Nt.

S306. The target base station sends a third message to the source base station.

The third message may be a handover request confirmation message. The handover request confirmation message includes the key exchange algorithm selected by the target base station and the first public key generated by the target base station.

S307. The source base station sends a first message to the terminal.

The first message may be an RRC connection reconfiguration message. The RRC connection reconfiguration message may include the key exchange algorithm selected by the target base station and the first public key generated by the target base station.

S308. The terminal calculates the second key based on the prestored first key, and the cell identity and the carrier frequency of the target cell, where KeNB*CELL = Func(KeNB, Target-cell PCI, Target-cell DlEarfcn). The derivation formula is defined in 3GPP 33.401 section A.5. KeNB* is the second key (the new key), KeNB is the first key (the original key), Target-cell PCI (Physical Cell ID) is the cell identity of the target cell, and Target-cell DlEarfcn is the carrier frequency of the target cell.

S309. The source base station sends a state transfer message to the target base station. The state transfer message is used to notify the target base station of completion of a handover.

S310. The terminal generates an RRC integrity protection key, an RRC encryption key, and a user plane encryption key based on the second key. The target base station generates the RRC integrity protection key, the RRC encryption key, and the user plane encryption key based on the first key.

S311. The terminal generates a second public key and a first private key.

During specific implementation, the terminal and the target base station first agree on the initial number g, and separately generate the random numbers Nu and Nt locally, and then the terminal generates the public-private key pair based on the random numbers Nu and Nt. The public-private key pair includes the second public key and the first private key.

S312. The terminal sends a second message to the target base station. The second message may be an RRC reconfiguration complete message. The RRC reconfiguration complete message includes the second public key generated by the terminal.

During specific implementation, before sending the second message to the target base station, the terminal first performs encryption processing on the second message by using the previously generated RRC integrity protection key and RRC encryption key, and then sends the encrypted second message to the target base station. After receiving the encrypted second message, the target base station decrypts the second message by using the RRC integrity protection key and the RRC encryption key that are previously generated by the target base station.

S313. The terminal generates a first shared key based on the key exchange algorithm, the first public key, and the first private key generated by the terminal. The target base station generates the first shared key based on the second public key, the key exchange algorithm selected by the target base station, and the second private key generated by the target base station.

S314. The terminal generates the RRC integrity protection key, the RRC encryption key, and the user plane encryption key based on the first shared key. The target base station generates the RRC integrity protection key, the RRC encryption key, and the user plane encryption key based on the first shared key.

Optionally, after the terminal generates the first shared key based on the key exchange algorithm, the first public key, and the first private key generated by the terminal, the terminal generates a second shared key based on the first shared key, and the cell identity and the carrier frequency of the target cell. After the target base station generates the first shared key based on the second public key, the key exchange algorithm selected by the target base station, and the second private key generated by the target base station, the terminal generates the second shared key based on the first shared key, and the cell identity and the carrier frequency of the target cell. In this way, a new shared key is generated by using a historical shared key.

In this embodiment of this application, during the Xn handover of the terminal, a DH key exchange is implemented between the terminal and the target base station based on a current message, without requiring additional signaling. After the handover is completed, a secret shared key is created between the terminal and the base station. Subsequent communication is protected through derivation performed based on the shared key, so that there is no need to deduce a key relying on KeNB* of the source base station, and exposure of a historically used key does not lead to exposure of a future session key. In addition, during a handover, identity forgery of the UE and the target base station can be prevented, and a new key negotiated each time can be ensured to be novel and adaptable to the UE and the base station with different key strength security requirements.

The foregoing describes the method in the embodiment of this application in detail. The following provides an apparatus according to the embodiments of this application.

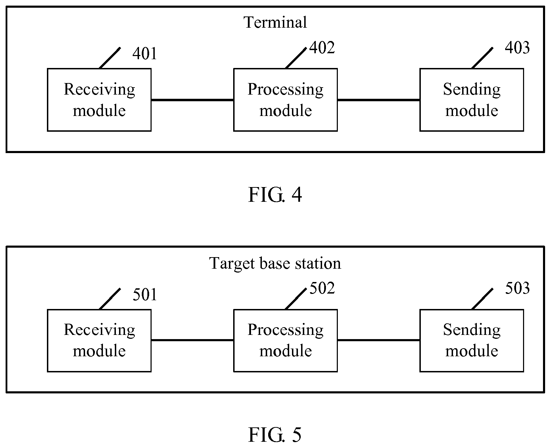

FIG 4 is a schematic structural diagram of a terminal according to an embodiment of this application. The terminal may include a receiving module 401, a processing module 402, and a sending module 403. A detailed description of each unit is as follows:

The receiving module 401 is configured to receive a first message sent by a source base station, where the first message includes a key exchange algorithm selected by a target base station and a first public key generated by the target base station.

The processing module 402 is configured to generate a first shared key based on the key exchange algorithm, the first public key, and a first private key generated by the terminal.

The sending module 403 is configured to send a second message to the target base station, where the second message includes a second public key generated by the terminal.

Optionally, the processing module 402 is further configured to generate a second key based on a prestored first key, and a cell identity and a carrier frequency of a target cell, and perform encryption processing on the second message by using the second key.

Optionally, the sending module 403 is further configured to send a plurality of key exchange algorithms supported by the terminal to the source base station.

Optionally, the processing module 402 is further configured to generate an RRC integrity protection key, an RRC encryption key, and a user plane encryption key based on the first shared key.

Optionally, the processing module 402 is further configured to generate a second shared key based on the first shared key, and the cell identity and the carrier frequency of the target cell.

It should be noted that, for implementation of each module, reference may be made to corresponding descriptions in the method embodiment shown in FIG 3, and each module performs a method and a function that are performed by the terminal in the foregoing embodiment.

FIG 5 is a schematic structural diagram of a target base station according to an embodiment of this application. The target base station may include a receiving module 501, a processing module 502, and a sending module 503. A detailed description of each unit is as follows:

The receiving module 501 is configured to receive a second message sent by a terminal, where the second message includes a second public key generated by the terminal.

The processing module 502 is configured to generate a first shared key based on the second public key, a key exchange algorithm selected by the target base station, and a second private key generated by the target base station.

Optionally, the receiving module 501 is further configured to receive a handover request sent by a source base station, where the handover request includes a plurality of key exchange algorithms supported by the terminal; and the processing module 502 is further configured to select the key exchange algorithm from the plurality of key exchange algorithms.

Optionally, the sending module 503 is configured to send a third message to the source base station, where the third message includes the key exchange algorithm selected by the target base station and a first public key generated by the target base station.

Optionally, the processing module 502 is further configured to generate an RRC integrity protection key, an RRC encryption key, and a user plane encryption key based on the first shared key.

Optionally, the processing module 502 is further configured to generate a second shared key based on the first shared key, and a cell identity and a carrier frequency of a target cell.

It should be noted that, for implementation of each module, reference may be made to corresponding descriptions in the method embodiment shown in FIG 3, and each module performs a method and a function performed by the target base station in the foregoing embodiment.

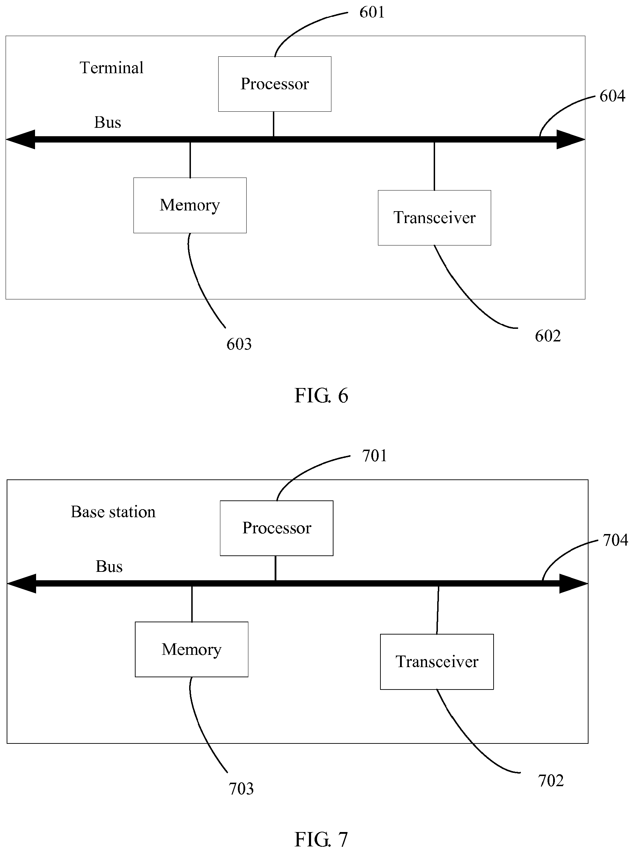

FIG 6 is a schematic structural diagram of a terminal according to this application. As shown in the figure, the terminal may include at least one processor 601, for example, a CPU, at least one communications interface 602, at least one memory 603, and at least one communications bus 604. The communications bus 604 is configured to implement connection communication between these components. The communications interface 602 of the device in this embodiment of this application is configured to perform signaling or data communication with another node or device. The memory 603 may be a high-speed RAM memory, or may be a non-volatile memory (non-volatile memory), for example, at least one disk memory. Optionally, the memory 603 may be at least one storage apparatus that is located away from the foregoing processor 601. The memory 603 stores a set of program code, and the processor 601 executes a program that is executed by the foregoing terminal in the memory 603, to perform the following operations:
receiving a first message sent by a source base station, where the first message includes a key exchange algorithm selected by a target base station and a first public key generated by the target base station;
generating a first shared key based on the key exchange algorithm, the first public key, and a first private key generated by the terminal; and
sending a second message to the target base station, where the second message includes a second public key generated by the terminal.

Further, the processor may work with the memory and the communications interface to perform an operation performed by the terminal in the foregoing embodiment of this application.

FIG 7 is a schematic structural diagram of a target base station according to this application. As shown in the figure, the target base station may include at least one processor 701, for example, a CPU, at least one communications interface 702, at least one memory 703, and at least one communications bus 704. The communications bus 704 is configured to implement connection communication between these components. The communications interface 702 of the device in this embodiment of this application is configured to perform signaling or data communication with another node or device. The memory 703 may be a high-speed RAM memory, or may be a non-volatile memory (non-volatile memory), for example, at least one disk memory. Optionally, the memory 703 may be at least one storage apparatus that is located away from the foregoing processor 701. The memory 703 stores a set of program code, and the processor 701 executes a program that is executed by the foregoing terminal in the memory 703, to perform the following operations:
receiving a second message sent by a terminal, where the second message includes a second public key generated by the terminal; and
generating a first shared key based on the second public key, a key exchange algorithm selected by the target base station, and a second private key generated by the target base station.

All or some of the foregoing embodiments may be implemented by using software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, all or some of procedures or functions in the embodiments of the present invention are generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) manner or a wireless (for example, infrared, radio, or microwave) manner. The computer-readable storage medium may be any usable medium accessible to a computer, or a data storage device including one or more usable media, such as a server or a data center. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. A key generation method, comprising:
receiving, by a terminal, a first message sent (S307) by a source base station, wherein the first message comprises a key exchange algorithm selected by a target base station and a first public key generated by the target base station, the key exchange algorithm being one of a plurality of key exchange algorithms supported by the terminal and sent by the terminal to the source base station;
generating (S313), by the terminal, a first shared key based on the key exchange algorithm, the first public key, and a first private key generated by the terminal; and
sending (S312), by the terminal, a second message to the target base station, wherein the second message comprises a second public key generated by the terminal,
wherein before the receiving, by a terminal, a first message sent by a source base station, the method further comprises:
sending, by the terminal, a plurality of key exchange algorithms supported by the terminal to the source base station,
the method further comprising generating, by the terminal, a public-private key pair including the second public key and the first private key,
wherein the first message further comprises a cell identity and a carrier frequency of a target cell; and
before the sending, by the terminal, a second message to the target base station, the method further comprises:
generating, by the terminal, a second key based on a prestored first key, and the cell identity and the carrier frequency of the target cell; and
performing encryption processing on the second message by using the second key.

2. The method according to claim 1, wherein the plurality of key exchange algorithms are sent by the source base station to the target base station.

3. A key generation method, comprising:
receiving, by a target base station, a second message sent (S312) by a terminal, wherein the second message comprises a second public key generated by the terminal; and
generating (S313), by the target base station, a first shared key based on the second public key, a key exchange algorithm selected by the target base station, and a second private key generated by the target base station,
wherein before the receiving, by a target base station, a second message sent by a terminal, the method further comprises:
receiving, by the target base station, a handover request sent by a source base station, wherein the handover request comprises a plurality of key exchange algorithms supported by the terminal; and
selecting, by the target base station, the key exchange algorithm from the plurality of key exchange algorithms,
wherein when the first public key and the second private key are generated, the terminal and the target base station agree on an initial number g, and separately generate random numbers Nu and Nt locally, and the target base station generates a public-private key pair based on the random numbers Nu and Nt.

4. The method according to claim 3, wherein after the selecting, by the target base station, the key exchange algorithm from the plurality of key exchange algorithms, the method further comprises:
sending, by the target base station, a third message to the source base station, wherein the third message comprises the key exchange algorithm selected by the target base station and a first public key generated by the target base station.

5. The method according to any one of claims 3 and 4, wherein after the generating, by the target base station, a first shared key based on the second public key, a key exchange algorithm selected by the target base station, and a second private key generated by the target base station, the method further comprises:
generating, by the target base station, an RRC integrity protection key, an RRC encryption key, and a user plane encryption key based on the first shared key.

6. A system comprising a terminal and a source base station or a target base station, the terminal comprising:
a receiving module (401), configured to receive a first message sent by the source base station, wherein the first message comprises a key exchange algorithm selected by the target base station and a first public key generated by the target base station, the key exchange algorithm being one of a plurality of key exchange algorithms supported by the terminal and sent by the terminal to the source base station;
a processing module (402), configured to generate a first shared key based on the key exchange algorithm, the first public key, and a first private key generated by the terminal; and
a sending module (403), configured to send a second message to the target base station, wherein the second message comprises a second public key generated by the terminal,
wherein the sending module is further configured to send a plurality of key exchange algorithms supported by the terminal to the source base station, wherein the plurality of key exchange algorithms are sent by the source base station to the target base station,
wherein the terminal is configured to generate a public-private key pair including the second public key and the first private key,
wherein the first message further comprises a cell identity and a carrier frequency of a target cell; and
the terminal further comprises:
the processing module, further configured to generate a second key based on a prestored first key, and the cell identity and the carrier frequency of the target cell, and perform encryption processing on the second message by using the second key.

7. A target base station, comprising:
a receiving module (501), configured to receive a second message sent by a terminal, wherein the second message comprises a second public key generated by the terminal; and
a processing module (502), configured to generate a first shared key based on the second public key, a key exchange algorithm selected by the target base station, and a second private key generated by the target base station,
wherein the receiving module is further configured to receive a handover request sent by a source base station, wherein the handover request comprises a plurality of key exchange algorithms supported by the terminal; and
the processing module is further configured to select the key exchange algorithm from the plurality of key exchange algorithms,
when the first public key and the second private key are generated, the terminal and the target base station agree on an initial number g, and separately generate random numbers Nu and Nt locally, and the target base station generates a public-private key pair based on the random numbers Nu and Nt.

8. The target base station according to claim 7, wherein the base station further comprises
a sending module, configured to send a third message to the source base station, wherein the third message comprises the key exchange algorithm selected by the target base station and a first public key generated by the target base station.

## Patentansprüche

1. Schlüsselerzeugungsverfahren, umfassend:
Empfangen, durch ein Endgerät, einer ersten Nachricht, die durch eine Quellbasisstation gesendet (S307) wird, wobei die erste Nachricht einen Schlüsselaustauschalgorithmus, der durch eine Zielbasisstation ausgewählt wird, und einen ersten öffentlichen Schlüssel, der durch die Zielbasisstation erzeugt wird, umfasst, wobei der Schlüsselaustauschalgorithmus einer aus einer Vielzahl von Schlüsselaustauschalgorithmen ist, die durch das Endgerät unterstützt werden und durch das Endgerät an die Quellbasisstation gesendet werden;
Erzeugen (S313), durch das Endgerät, eines ersten gemeinsamen Schlüssels basierend auf dem Schlüsselaustauschalgorithmus, dem ersten öffentlichen Schlüssel und einem ersten privaten Schlüssel, der durch das Endgerät erzeugt wird; und
Senden (S312), durch das Endgerät, einer zweiten Nachricht an die Zielbasisstation, wobei die zweite Nachricht einen zweiten öffentlichen Schlüssel umfasst, der durch das Endgerät erzeugt wird,
wobei vor dem Empfangen, durch ein Endgerät, einer ersten Nachricht, die durch eine Quellbasisstation gesendet wird, das Verfahren ferner umfasst:
Senden, durch das Endgerät, einer Vielzahl von Schlüsselaustauschalgorithmen, die durch das Endgerät unterstützt werden, an die Quellbasisstation,
das Verfahren ferner umfassend das Erzeugen, durch das Endgerät, eines öffentlich-privaten Schlüsselpaares, das den zweiten öffentlichen Schlüssel und den ersten privaten Schlüssel beinhaltet,
wobei die erste Nachricht ferner eine Zellenkennung und eine Trägerfrequenz einer Zielzelle umfasst; und
wobei vor dem Senden, durch das Endgerät, einer zweiten Nachricht an die Zielbasisstation, das Verfahren ferner umfasst:
Erzeugen, durch das Endgerät, eines zweiten Schlüssels basierend auf einem zuvor gespeicherten ersten Schlüssel, und der Zellenkennung und der Trägerfrequenz der Zielzelle; und
Durchführen einer Verschlüsselungsverarbeitung an der zweiten Nachricht durch Verwenden des zweiten Schlüssels.

2. Verfahren nach Anspruch 1, wobei die Vielzahl von Schlüsselaustauschalgorithmen durch die Quellbasisstation an die Zielbasisstation gesendet werden.

3. Schlüsselerzeugungsverfahren, umfassend:
Empfangen, durch eine Zielbasisstation, einer zweiten Nachricht, die durch ein Endgerät gesendet (S312) wird, wobei die zweite Nachricht einen zweiten öffentlichen Schlüssel umfasst, der durch das Endgerät erzeugt wird; und
Erzeugen (S313), durch die Zielbasisstation, eines ersten gemeinsamen Schlüssels basierend auf dem zweiten öffentlichen Schlüssel, einem Schlüsselaustauschalgorithmus, der durch die Zielbasisstation ausgewählt wird, und einem zweiten privaten Schlüssel, der durch die Zielbasisstation erzeugt wird,
wobei vor dem Empfangen, durch eine Zielbasisstation, einer zweiten Nachricht, die durch ein Endgerät gesendet wird, das Verfahren ferner umfasst:
Empfangen, durch die Zielbasisstation, einer Handover-Anforderung, die durch eine Quellbasisstation gesendet wird, wobei die Handover-Anforderung eine Vielzahl von Schlüsselaustauschalgorithmen umfasst, die durch das Endgerät unterstützt werden; und
Auswählen, durch die Zielbasisstation, des Schlüsselaustauschalgorithmus aus der Vielzahl von Schlüsselaustauschalgorithmen,
wobei, wenn der erste öffentliche Schlüssel und der zweite private Schlüssel erzeugt werden, sich das Endgerät und die Zielbasisstation auf eine Anfangszahl g einigen und lokal Zufallszahlen Nu und Nt getrennt erzeugen, und die Zielbasisstation basierend auf den Zufallszahlen Nu und Nt ein öffentlich-privates Schlüsselpaar erzeugt.

4. Verfahren nach Anspruch 3, wobei nach dem Auswählen, durch die Zielbasisstation, des Schlüsselaustauschalgorithmus aus der Vielzahl von Schlüsselaustauschalgorithmen, das Verfahren ferner umfasst:
Senden, durch die Zielbasisstation, einer dritten Nachricht an die Quellbasisstation, wobei die dritte Nachricht den Schlüsselaustauschalgorithmus, der durch die Zielbasisstation ausgewählt wird, und einen ersten öffentlichen Schlüssel, der durch die Zielbasisstation erzeugt wird, umfasst.

5. Verfahren nach einem der Ansprüche 3 und 4, wobei nach dem Erzeugen, durch die Zielbasisstation, eines ersten gemeinsamen Schlüssels basierend auf dem zweiten öffentlichen Schlüssel, einem Schlüsselaustauschalgorithmus, der durch die Zielbasisstation ausgewählt wird, und einem zweiten privaten Schlüssel, der durch die Zielbasisstation erzeugt wird, das Verfahren ferner umfasst:
Erzeugen, durch die Zielbasisstation, eines RRC-Integritätsschutzschlüssels, eines RRC-Verschlüsselungsschlüssels und eines Benutzerebenenverschlüsselungsschlüssels basierend auf dem ersten gemeinsamen Schlüssel.

6. System, umfassend ein Endgerät und eine Quellbasisstation oder eine Zielbasisstation, das Endgerät umfassend:
ein Empfangsmodul (401), das konfiguriert ist, um eine erste Nachricht, die durch die Quellbasisstation gesendet wird, zu empfangen, wobei die erste Nachricht einen Schlüsselaustauschalgorithmus, der durch die Zielbasisstation ausgewählt wird, und einen ersten öffentlichen Schlüssel, der durch die Zielbasisstation erzeugt wird, umfasst, wobei der Schlüsselaustauschalgorithmus einer aus einer Vielzahl von Schlüsselaustauschalgorithmen ist, die durch das Endgerät unterstützt werden und durch das Endgerät an die Quellbasisstation gesendet werden;
ein Verarbeitungsmodul (402), das konfiguriert ist, um einen ersten gemeinsamen Schlüssel basierend auf dem Schlüsselaustauschalgorithmus, dem ersten öffentlichen Schlüssel und einem ersten privaten Schlüssel, der durch das Endgerät erzeugt wird, zu erzeugen; und
ein Sendemodul (403), das konfiguriert ist, um eine zweite Nachricht an die Zielbasisstation zu senden, wobei die zweite Nachricht einen zweiten öffentlichen Schlüssel umfasst, der durch das Endgerät erzeugt wird,
wobei das Sendemodul ferner konfiguriert ist, um eine Vielzahl von Schlüsselaustauschalgorithmen, die durch das Endgerät unterstützt werden, an die Quellbasisstation zu senden, wobei die Vielzahl von Schlüsselaustauschalgorithmen durch die Quellbasisstation an die Zielbasisstation gesendet werden,
wobei das Endgerät konfiguriert ist, um ein öffentlich-privates Schlüsselpaar zu erzeugen, das den zweiten öffentlichen Schlüssel und den ersten privaten Schlüssel beinhaltet,
wobei die erste Nachricht ferner eine Zellenkennung und eine Trägerfrequenz einer Zielzelle umfasst; und
das Endgerät ferner umfasst:
das Verarbeitungsmodul, das ferner konfiguriert ist, um einen zweiten Schlüssel basierend auf einem zuvor gespeicherten ersten Schlüssel und die Zellenkennung und die Trägerfrequenz der Zielzelle zu erzeugen und eine Verschlüsselungsverarbeitung an der zweiten Nachricht durch Verwenden des zweiten Schlüssels durchzuführen.

7. Zielbasisstation, umfassend:
ein Empfangsmodul (501), das konfiguriert ist, um eine zweite Nachricht, die durch ein Endgerät gesendet wird, zu empfangen, wobei die zweite Nachricht einen zweiten öffentlichen Schlüssel umfasst, der durch das Endgerät erzeugt wird; und
ein Verarbeitungsmodul (502), das konfiguriert ist, um einen ersten gemeinsamen Schlüssel basierend auf dem zweiten öffentlichen Schlüssel, einem Schlüsselaustauschalgorithmus, der durch die Zielbasisstation ausgewählt wird, und einem zweiten privaten Schlüssel, der durch die Zielbasisstation erzeugt wird, zu erzeugen,
wobei das Empfangsmodul ferner konfiguriert ist, um eine Handover-Anforderung, die durch eine Quellbasisstation gesendet wird, zu empfangen, wobei die Handover-Anforderung eine Vielzahl von Schlüsselaustauschalgorithmen umfasst, die durch das Endgerät unterstützt werden; und
das Verarbeitungsmodul ferner konfiguriert ist, um den Schlüsselaustauschalgorithmus aus der Vielzahl von Schlüsselaustauschalgorithmen auszuwählen,
wobei, wenn der erste öffentliche Schlüssel und der zweite private Schlüssel erzeugt werden, sich das Endgerät und die Zielbasisstation auf eine Anfangszahl g einigen und lokal Zufallszahlen Nu und Nt getrennt erzeugen, und die Zielbasisstation basierend auf den Zufallszahlen Nu und Nt ein öffentlich-privates Schlüsselpaar erzeugt.

8. Zielbasisstation nach Anspruch 7, wobei die Basisstation ferner umfasst:
ein Sendemodul, das konfiguriert ist, um eine dritte Nachricht an die Quellbasisstation zu senden, wobei die dritte Nachricht den Schlüsselaustauschalgorithmus, der durch die Zielbasisstation ausgewählt wird, und einen ersten öffentlichen Schlüssel, der durch die Zielbasisstation erzeugt wird, umfasst.

## Revendications

1. Procédé de génération de clé, comprenant :
la réception, par un terminal, d'un premier message envoyé (S307) par une station de base source, le premier message comprenant un algorithme d'échange de clé sélectionné par une station de base cible et une première clé publique générée par la station de base cible, l'algorithme d'échange de clé étant l'un d'une pluralité d'algorithmes d'échange de clés pris en charge par le terminal et envoyés par le terminal à la station de base source ;
la génération (S313), par le terminal, d'une première clé partagée sur la base de l'algorithme d'échange de clé, de la première clé publique et d'une première clé privée générée par le terminal ; et
l'envoi (S312), par le terminal, d'un deuxième message à la station de base cible, le deuxième message comprenant une seconde clé publique générée par le terminal,
avant la réception, par un terminal, d'un premier message envoyé par une station de base source, le procédé comprenant en outre :
l'envoi, par le terminal, d'une pluralité d'algorithmes d'échange de clés supportés par le terminal à la station de base source,
le procédé comprenant en outre la génération, par le terminal, d'une paire de clés publique-privée comportant la seconde clé publique et la première clé privée,
le premier message comprenant en outre une identité de cellule et une fréquence porteuse d'une cellule cible ; et
avant l'envoi, par le terminal, d'un deuxième message à la station de base cible, le procédé comprend en outre :
la génération, par le terminal, d'une seconde clé sur la base d'une première clé pré-enregistrée, et de l'identité de cellule et de la fréquence porteuse de la cellule cible ; et
le fait d'effectuer un traitement de chiffrement sur le deuxième message à l'aide de la seconde clé.

2. Procédé selon la revendication 1, dans lequel la pluralité d'algorithmes d'échange de clé est envoyée par la station de base source à la station de base cible.

3. Procédé de génération de clé, comprenant :
la réception, par une station de base cible, d'un deuxième message envoyé (S312) par un terminal, le deuxième message comprenant une seconde clé publique générée par le terminal ; et
la génération (S313), par la station de base cible, d'une première clé partagée sur la base de la seconde clé publique, d'un algorithme d'échange de clé sélectionné par la station de base cible et d'une seconde clé privée générée par la station de base cible,
avant la réception, par une station de base cible, d'un deuxième message envoyé par un terminal, le procédé comprenant en outre :
la réception, par la station de base cible, d'une demande de transfert envoyée par une station de base source, la demande de transfert comprenant une pluralité d'algorithmes d'échange de clés pris en charge par le terminal ; et
la sélection, par la station de base cible, de l'algorithme d'échange de clés parmi la pluralité d'algorithmes d'échange de clés,
lorsque la première clé publique et la seconde clé privée étant générées, le terminal et la station de base cible s'accordant sur un nombre initial g, et générant séparément des nombres aléatoires Nu et Nt localement, et la station de base cible générant une paire de clés publique-privée basé sur les nombres aléatoires Nu et Nt.

4. Procédé selon la revendication 3, dans lequel après la sélection, par la station de base cible, de l'algorithme d'échange de clés parmi la pluralité d'algorithmes d'échange de clés, le procédé comprend en outre :
l'envoi, par la station de base cible, d'un troisième message à la station de base source, le troisième message comprenant l'algorithme d'échange de clé sélectionné par la station de base cible et une première clé publique générée par la station de base cible.

5. Procédé selon l'une quelconque des revendications 3 et 4, dans lequel après la génération, par la station de base cible, d'une première clé partagée sur la base de la seconde clé publique, d'un algorithme d'échange de clé sélectionné par la station de base cible, et d'une seconde clé privée générée par la station de base cible, le procédé comprend en outre :
la génération, par la station de base cible, d'une clé de protection d'intégrité RRC, d'une clé de chiffrement RRC et d'une clé de chiffrement de plan d'utilisateur sur la base de la première clé partagée.

6. Système comprenant un terminal et une station de base source ou une station de base cible, le terminal comprenant :
un module de réception (401), configuré pour recevoir un premier message envoyé par la station de base source, le premier message comprenant un algorithme d'échange de clé sélectionné par la station de base cible et une première clé publique générée par la station de base cible, l'algorithme d'échange de clé étant l'un d'une pluralité d'algorithmes d'échange de clés pris en charge par le terminal et envoyé par le terminal à la station de base source ;
un module de traitement (402), configuré pour générer une première clé partagée sur la base de l'algorithme d'échange de clé, de la première clé publique et d'une première clé privée générée par le terminal ; et
un module d'envoi (403), configuré pour envoyer un deuxième message à la station de base cible, le deuxième message comprenant une seconde clé publique générée par le terminal,
le module d'envoi étant en outre configuré pour envoyer une pluralité d'algorithmes d'échange de clés pris en charge par le terminal à la station de base source, la pluralité d'algorithmes d'échange de clés étant envoyés par la station de base source à la station de base cible,
le terminal étant configuré pour générer une paire de clés publique-privée comportant la seconde clé publique et la première clé privée,
le premier message comprenant en outre une identité de cellule et une fréquence porteuse d'une cellule cible ; et
le terminal comprenant en outre :
le module de traitement, configuré en outre pour générer une seconde clé sur la base d'une première clé pré-enregistrée, et de l'identité de cellule et de la fréquence porteuse de la cellule cible, et le fait d'effectuer un traitement de chiffrement sur le deuxième message à l'aide de la seconde clé.

7. Station de base cible, comprenant :
un module de réception (501), configuré pour recevoir un deuxième message envoyé par un terminal, le deuxième message comprenant une seconde clé publique générée par le terminal ; et
un module de traitement (502), configuré pour générer une première clé partagée sur la base de la seconde clé publique, d'un algorithme d'échange de clé sélectionné par la station de base cible et d'une seconde clé privée générée par la station de base cible,
le module de réception étant en outre configuré pour recevoir une demande de transfert envoyée par une station de base source, la demande de transfert comprenant une pluralité d'algorithmes d'échange de clés pris en charge par le terminal ; et
le module de traitement étant en outre configuré pour sélectionner l'algorithme d'échange de clés parmi la pluralité d'algorithmes d'échange de clés,
lorsque la première clé publique et la seconde clé privée sont générées, le terminal et la station de base cible s'accordent sur un nombre initial g, et génèrent séparément des nombres aléatoires Nu et Nt localement, et la station de base cible génère une paire de clés publique-privée basée sur les nombres aléatoires Nu et Nt.

8. Station de base cible selon la revendication 7, dans laquelle la station de base comprend en outre :
un module d'envoi, configuré pour envoyer un troisième message à la station de base source, le troisième message comprenant l'algorithme d'échange de clé sélectionné par la station de base cible et une première clé publique générée par la station de base cible.
